# EUROPEAN PATENT APPLICATION

(11) **EP 1 911 783 A1**
(43) Date of publication of application: **16.04.2008**
(21) Application number: 06782288.2
(22) Date of filing: 03.08.2006
(51) Int. Cl.: C08G 18/48, C08G 101/00

(54) **FLEXIBLE POLYURETHANE FOAM, PROCESS FOR PRODUCING THE SAME, AND AUTOMOTIVE SHEET**

(30) Priority: 05.08.2005 JP 2005227632
(71) Applicant: Asahi Glass Company, Limited, Chiyoda-ku Tokyo 100-8405 (JP)
(72) Inventor: SASAKI, Takayuki Asahi Glass Urethane Co., Ltd., Ibaraki 314-0195 (JP); HATANO, Shigeo Asahi Glass Urethane Co., Ltd., Ibaraki 314-0195 (JP)
(74) Representative: Hartz, Nikolai
(86) International application number: PCT/JP2006/315428
(87) International publication number: WO 2007/018129

(57) **Abstract**

It is to provide a flexible polyurethane foam having favorable vibration characteristics and further having excellent sound absorption characteristics, a process for its production and a seat for an automobile.

A process for producing a flexible polyurethane foam, which comprises reacting a polyol compound with a polyisocyanate compound in the presence of a foam stabilizer, a blowing agent and a urethane-forming catalyst, wherein as the polyol compound, a polyol compound containing a polyoxyalkylene polyol (A) having an oxyalkylene group obtained by ring opening addition polymerization of an alkylene oxide by using a composite metal cyanide complex catalyst and having an unsaturation value less than 0.04 meq/g, a polyoxyalkylene polyol (B) obtained by random ring opening addition polymerization of ethylene oxide and an alkylene oxide having at least 3 carbon atoms to an initiator, and a polymer-dispersed polyol (C), is used.

## Description

### TECHNICAL FIELD

The present invention relates to a flexible polyurethane foam, a process for its production and a seat for an automobile.

### BACKGROUND ART

In recent years, as a part of improvement in the merchantability of automobiles, improvement in the riding comfort and reduction of noises in the car interior have been desired. With respect to the improvement in the riding comfort, it has been considered to be effective to improve the impact resilience and the vibration characteristics of a seat for an automobile. With respect to the reduction in noise in the car interior, it is common to reduce noises such as the engine sound, the road noise and the wind noise by a soundproof component such as a dash insulator.
(1) With respect to the improvement in the riding comfort, Patent Document 1 proposes a process for producing a flexible foam having a specific impact resilience and excellent in the vibration characteristics.
(2) With respect to the reduction in noise in the car interior, Patent Document 2 proposes a flexible foam having specific levels of air flowability and hardness and having soundproof characteristics improved, and a process for its production.
(3) Further, Patent Document 3 proposes a process for producing a light weight flexible foam excellent in soundproof properties.

However, if a soundproof component comprising the flexible foam of (2) or (3) is attached for the purpose of reducing noise in the car interior, problems tend to arise such that (i) the mass of the automobile will increase, which is against the reduction in the fuel consumption and thus against the environmental protection, (ii) the cost will increase as the number of components increases, and (iii) the degree of freedom of design will be low.
Patent Document 1: WO2001/79323
Patent Document 2: JP-B-7-59389
Patent Document 3: JP-A-5-209036

### DISCLOSURE OF THE INVENTION

### OBJECT TO BE ACCOMPLISHED BY THE INVENTION

To solve the above problems, it is considered that the noise in the car interior can be reduced without increasing the number of components and the mass, if the existing interior component such as a seat cushion is made to have a sound absorbing effect. However, heretofore, when a flexible polyurethane foam for a seat cushion is designed, mainly the vibration characteristics for improvement in the riding comfort have been considered, and the sound absorbing performance for reduction of the noise in the car interior has not been considered. A seat cushion having improved vibration characteristics and improved riding comfort, to which high sound absorption characteristics are imparted, is considered to be useful in view of both environmental protection and cost.

Accordingly, it is an object of the present invention to provide a flexible polyurethane foam having favorable vibration characteristics and further having excellent sound absorption characteristics in a wide frequency range of from 500 Hz to 4 kHz, a process for its production and a seat for an automobile.

### MEANS TO ACCOMPLISH THE OBJECT

The process for producing a flexible polyurethane foam of the present invention is a process for producing a flexible polyurethane foam, which comprises reacting a polyol compound with a polyisocyanate compound in the presence of a foam stabilizer, a blowing agent and a urethane-forming catalyst, wherein as the polyol compound, a polyol compound containing a polyoxyalkylene polyol (A) having an oxyalkylene group obtained by ring opening addition polymerization of an alkylene oxide to an initiator by using a composite metal cyanide complex catalyst and having an unsaturation value less than 0.04 meq/g, a polyoxyalkylene polyol (B) obtained by random ring opening addition polymerization of ethylene oxide and an alkylene oxide having at least 3 carbon atoms to an initiator by using an alkali metal compound catalyst, and a polymer-dispersed polyol (C), is used.

The polyol (A) is preferably a polyol (A1) having an oxyethylene terminal structure obtained by ring opening addition polymerization of propylene oxide to an initiator by using a composite metal cyanide complex catalyst and then ring opening addition polymerization of ethylene oxide, having an amount of all oxyethylene groups of from 10 to 30 mass% in the polyol (A) (100 mass), having from 2 to 6 functional groups and having a hydroxyl value of from 15 to 56 mgKOH/g, or a polyol (A2) having an oxyethylene terminal structure obtained by ring opening addition polymerization of propylene oxide to an initiator by using a composite metal cyanide complex catalyst, then random ring opening addition polymerization of ethylene oxide and propylene oxide, and then ring opening addition polymerization of ethylene oxide, having an amount of all oxyethylene groups of from 10 to 30 mass% in the polyol (A) (100 mass), having an amount of oxyethylene groups at a random portion of at most 10 mass% in the polyol (A) (100 mass), having from 2 to 6 functional groups, and having a hydroxyl value of from 15 to 56 mgKOH/g.

Preferably, the polyol (B) is obtained by random ring opening addition polymerization of ethylene oxide and propylene oxide to an initiator, has a mass ratio of ethylene oxide to propylene oxide (ethylene oxide/propylene oxide) of from 50/50 to 95/5, has from 2 to 6 functional groups, and has a hydroxyl value of from 22 to 120 mgKOH/g.

Further, the fine polymer particles (C') are preferably fine particles dispersed in the polymer-dispersed polyol (C) obtained by polymerizing a monomer in a polyol (C"). Still further, it is preferred that the content of the polyol (A) is from 5 to 80 mass% per 100 mass% of the total amount of the polyols (A), (B) and (C), the content of the polyol (B) is from 0.5 to 15 mass% per 100 mass% of the total amount of the polyols (A), (B) and (C), and the content of the polyol (C) is from 20 to 80 mass% per 100 mass% of the total amount of the polyols (A), (B) and (C).

The flexible polyurethane foam of the present invention is characterized by being obtained by the process for producing a flexible polyurethane foam of the present invention.

The seat for an automobile of the present invention is characterized by being provided with a seat cushion comprising the flexible polyurethane foam of the present invention.

### EFFECTS OF THE INVENTION

According to the process for producing a flexible polyurethane foam of the present invention, a flexible polyurethane foam having favorable vibration characteristics and further having excellent sound absorption characteristics over a wide frequency range of from 500 Hz to 4 kHz can be obtained.

The flexible polyurethane foam of the present invention has favorable vibration characteristics and further, has excellent sound absorption characteristics over a wide frequency range of from 500 Hz to 4 kHz.

The seat for an automobile of the present invention has favorable vibration characteristics and sound absorption characteristics, and is capable of reducing the noise in the car interior without increasing the number of components and the mass of the automobile.

### BEST MODE FOR CARRYING OUT THE INVENTION

The flexible polyurethane foam of the present invention is one obtained by reacting a polyol compound with a polyisocyanate compound in the presence of a foam stabilizer, a blowing agent and a urethane-forming catalyst.

Now, the respective raw material will be explained below.

### (Polyol (A))

The polyoxyalkylene polyol (A) (hereinafter referred to simply as polyol (A)) is a polyol having an oxyalkylene group obtained by ring opening addition polymerization of an alkylene oxide by using a composite metal cyanide complex catalyst and having an unsaturation value less than 0.04 meq/g.

By the unsaturation value of the polyol (A) being less than 0.04 meq/g, the air flowability of the flexible polyurethane foam to be obtained tends to be low, and favorable vibration characteristics and sound absorption characteristics in a low frequency region will be achieved.

The polyol (A) has, at least in part of its molecule, an oxyalkylene group obtained by ring opening addition polymerization of an alkylene oxide by using a composite metal cyanide complex catalyst. By the polyol (A) having such an oxyalkylene group, the unsaturation value less than 0.04 meq/g will be achieved, low air flowability will be achieved, and favorable vibration characteristics and sound absorption characteristics in a low frequency region will be achieved.

The composite metal cyanide complex catalyst may, for example, be one as disclosed in JP-B-46-27250. The composite metal cyanide complex catalyst is preferably a complex containing zinc hexacyanocobaltate as the main component which has high polymerization activity, and more preferred is its ether and/or alcohol complex.

The ether may, for example, be ethylene glycol dimethyl ether (glyme), diethylene glycol dimethyl ether (diglyme), ethylene glycol mono-tert-butyl ether (METB), ethylene glycol mono-tert-pentyl ether (METP), diethylene glycol mono-tert-butyl ether (DETB), tripropylene glycol monomethyl ether (TPME). Among them, particularly preferred is METB since the complex is easily handled at the time of preparation.

The alcohol may, for example, be methanol, ethanol, propanol, isopropanol, butanol, isobutanol or tert-butyl alcohol. Among them, particularly preferred is tert-butyl alcohol with a view to obtaining a high activity catalyst.

The polyol (A) is preferably a polyol (A1) having an oxyethylene terminal structure obtained by ring opening addition polymerization of propylene oxide to an initiator by using a composite metal cyanide complex catalyst and then ring opening addition polymerization of ethylene oxide for the purpose of making the unsaturation value be less than 0.04 meq/g, or a polyol (A2) having an oxyethylene terminal structure obtained by ring opening addition polymerization of propylene oxide to an initiator by using a composite metal cyanide complex catalyst, then random ring opening addition polymerization of ethylene oxide and propylene oxide by using a composite metal cyanide complex catalyst and then ring opening addition polymerization of ethylene oxide.

The polymerization catalyst in the case of ring opening addition polymerization of ethylene oxide to the molecular terminal, may, for example, be an alkali metal compound catalyst such as a potassium compound such as potassium hydroxide or potassium methoxide, or a cesium compound such as cesium metal, cesium hydroxide, cesium carbonate or cesium methoxide; or a phosphazenium compound catalyst.

The amount of all oxyethylene groups in the polyol (A1) or (A2) is from 10 to 30 mass%, preferably from 10 to 25 mass% in the polyol (A) (100 mass%). The initial strength of the flexible polyurethane foam to be obtained will be high when the amount of all oxyethylene groups is at least 10 mass%. When the amount of all oxyethylene groups is at most 30 mass%, closed cells in the flexible polyurethane foam to be obtained tend to decrease, and the flexible polyurethane foam is less likely to undergo shrinkage.

The amount of oxyethylene groups at a random portion in the polyol (A2) is at most 10 mass%, preferably at most 9 mass% in the polyol (A) (100 mass%). When the amount of oxyethylene groups at a random portion is at most 10 mass%, closed cells in the flexible polyurethane foam to be obtained tend to decrease, and the flexible polyurethane foam is less likely to undergo shrinkage. The lower limit of the amount of the oxyethylene groups at a random portion is preferably 1 mass%.

The initiator is preferably a compound having from 2 to 6 active hydrogen atoms in its molecule, and it may, for example, be water, a polyhydric alcohol such as ethylene glycol, propylene glycol, 1,4-butanediol, glycerol, trimethylolpropane, pentaerythritol, diglycerol, meso-erythritol, methylglucoside, glucose or sorbitol; a phenol such as bisphenol A; or a condensed compound such as a phenol resin or a novolac resin. Among them, preferred is a polyhydric alcohol having from 2 to 4 active hydrogen atoms. These initiators may be used alone or in combination of two or more of them. Further, a compound having 7 or more active hydrogen atoms such as sucrose may be used in combination. Further, a compound obtained by ring opening addition polymerization of propylene oxide to the above compound or an amine such as ethylene diamine, diethylene triamine, piperazine, diaminodiphenylmethane or monoethanolamine may be used as an initiator.

The number of functional groups (the number of active hydrogen atoms in the initiator) in the polyol (A) is preferably from 2 to 6, more preferably from 2 to 5. When the number of functional groups is 2 or more, the flexible polyurethane foam to be obtained will have moderate hardness and have favorable compressive residual strain. When the number of functional groups is at most 6, the flexible polyurethane foam to be obtained will not be too hard and will have favorable mechanical properties such as elongation.

The hydroxyl value of the polyol (A) is preferably from 15 to 56 mgKOH/g, more preferably from 15 to 40 mgKOH/g, furthermore preferably from 15 to 30 mgKOH/g. When the hydroxyl value is at least 15 mgKOH/g, the flexible polyurethane foam to be obtained will have favorable elasticity. When the hydroxyl value is at most 56 mgKOH/g, the flexible polyurethane foam to be obtained will have favorable flexibility and have improved vibration characteristics and sound absorption characteristics.

### (Polyol (B))

The polyoxyalkylene polyol (B) (hereinafter referred to as polyol (B)) is a polyol obtained by random ring opening addition polymerization of ethylene oxide and an alkylene oxide having at least 3 carbon atoms to an initiator by using an alkali metal compound catalyst.

The alkylene oxide having at least 3 carbon atoms is preferably propylene oxide in view of miscibility with ethylene oxide.

The mass ratio (ethylene oxide/propylene oxide) of ethylene oxide to propylene oxide is preferably from 50/50 to 95/5, more preferably from 70/30 to 90/10. When the proportion of ethylene oxide is at least 50 mass%, the proportion of closed cells will not be too high, a favorable open cell foam will be obtained, and favorable vibration characteristics and sound absorption characteristics will be achieved. When the proportion of ethylene oxide is at most 95 mass%, favorable compatibility with another polyol will be achieved, the polyol will not be separated, and a high quality product without coarsed cell will be obtained.

The polymerization catalyst may, for example, be an alkali metal compound catalyst, such as a potassium compound such as potassium hydroxide, potassium methoxide or a cesium compound such as cesium metal, cesium hydroxide, cesium carbonate or cesium methoxide. The potassium hydroxide is most favorable.

The initiator is preferably a compound having from 2 to 6, more preferably from 2 to 5 active hydrogen atoms in its molecule. It may, for example, be water, or a polyhydric alcohol such as ethylene glycol, propylene glycol, 1,4-butanediol, glycerol, trimethylolpropane, pentaerythritol, diglycerol, meso-erythritol, methylglucoside, glucose or sorbitol. They may be used alone or in combination of two or more of them. As the initiator for the polyol (B), a polyol obtained by selective ring opening addition polymerization of propylene oxide to a polyhydric alcohol is not used.

The number of functional groups (number of active hydrogen atoms of the initiator) in the polyol (B) is preferably from 2 to 6, more preferably from 2 to 5. When the number of functional groups is at least 2, cell size tends to be small, and favorable vibration characteristics and sound absorption characteristics will be achieved. When the number of functional groups is at most 6, the proportion of closed cells tends to be low, and a favorable flexible polyurethane foam will be obtained.

The hydroxyl value of the polyol (B) is preferably from 22 to 120 mgKOH/g, more preferably from 30 to 80 mgKOH/g. When the hydroxyl value is at least 22 mgKOH/g, the flexible polyurethane foam to be obtained will have favorable elasticity. When the hydroxyl value is at most 120 mgKOH/g, the flexible polyurethane foam to be obtained will have favorable flexibility and have improved vibration characteristics and sound absorption characteristics.

### (Polyol (C))

In the present invention, the polymer-dispersed polyol (C) (hereinafter referred to as polyol (C)) having fine polymer particles (C') stably dispersed in a polyoxyalkylene polyol matrix is used. The polyol (C) may be produced by a known method.

The fine polymer particles (C') may, for example, be fine particles of an addition polymerization type polymer such as a homopolymer or a copolymer of a vinyl monomer such as acrylonitrile, styrene, a methacrylate or an acrylate; or fine particles of a condensation polymerization type polymer such as a polyester, a polyurea, a polyurethane or a melamine resin.

As a method for producing the fine polymer particles (C'), a known method may be mentioned, and preferred is a method for producing fine polymer particles by polymerizing a monomer in a polyol.

The fine polymer particles (C') dispersed in a polyol may be fine polymer particles (C') obtained by polymerizing a monomer in the polyol (A), may be fine polymer particles (C') obtained by polymerizing a monomer in the polyol (B), or may be fine polymer particles (C') obtained by polymerizing a monomer in a polyol other than the polyol (A) and the polyol (B). The fine polymer particles (C') in the present invention are preferably fine polymer particles (C') obtained by polymerization in a polyol other than the polyol (A) and the polyol (B).

The content of the fine polymer particles (C') is preferably from 0.3 to 80 mass%, more preferably from 5 to 55 mass% per 100 mass% of the total amount of the polyols (A) and (B) and the fine polymer particles (C'). When the content of the polyol (C') is at least 0.3 mass%, the proportion of closed cells tends to be low, and a favorable flexible polyurethane foam will be obtained. When the content of the polyol (C') is at most 80 mass%, closed cells tend to be small, and favorable vibration characteristics and sound absorption characteristics will be achieved. Further, it is possible to make the polyol system at the time of production of the flexible polyurethane foam have a moderate viscosity.

The base polyoxyalkylene polyol at the time of production of the polyol (C) is not particularly limited. However, preferred is a polyol (C") having an oxyethylene terminal structure obtained by ring opening polymerization of propylene oxide to an initiator by using an alkali metal compound catalyst (preferably potassium hydroxide catalyst or cesium hydroxide catalyst) and then ring opening polymerization of ethylene oxide.

The number of functional groups (the number of active hydrogen atoms in the initiator) in the polyol (C") is preferably from 2 to 6, more preferably from 2 to 5. When the number of functional groups is 2 or more, the flexible polyurethane foam to be obtained will have moderate hardness and have favorable dry set. When the number of functional groups is at most 6, the flexible polyurethane foam to be obtained will not be too hard and will have favorable mechanical properties such as elongation.

The hydroxyl value of the polyol (C") is preferably from 15 to 120 mgKOH/g, more preferably from 25 to 85 mgKOH/g. When the hydroxyl value is at least 15 mgKOH/g, favorable stability of foaming behavior will be achieved. When the hydroxyl value is at most 120 mgKOH/g, the flexible polyurethane foam to be obtained will have favorable flexibility and have improved vibration characteristics and sound absorption characteristics.

By the presence of such fine polymer particles (C'), the hydroxyl value of the entire polyol (C) is usually lower than the hydroxyl value of the matrix polyol. The content of the fine polymer particles (C') is preferably at most 50 mass%, preferably at least 1 mass%, more preferably from 10 to 40 mass% in the polyol (C) (100 mass%).

### (Polyol compound)

The polyol compound in the present invention contains the polyol (A), the polyol (B) and the polyol (C).

The content of the polyol (A) is preferably from 5 to 80 mass%, more preferably from 10 to 60 mass% per 100 parts by mass of the total amount of the polyols (A), (B) and (C). When the content of the polyol (A) is at most 80 mass%, closed cells in the flexible polyurethane foam to be obtained tend to decrease, and the flexible polyurethane foam is less likely to undergo shrinkage. When the content of the polyol (A) is at least 5 mass%, favorable vibration characteristics and sound absorption characteristics will be obtained.

The content of the polyol (B) is preferably from 0.5 to 15 mass%, more preferably from 1 to 13 mass% per 100 mass% of the total amount of the polyols (A), (B) and (C). When the content of the polyol (B) is at least 0.5 mass%, the proportion of closed cells tends to be low, and a favorable flexible polyurethane foam will be obtained. When the content of the polyol (B) is at most 15 mass%, cells tend to be small, and favorable vibration characteristics and sound absorption characteristics will be achieved.

The content of the polyol (C) is preferably from 20 to 80, more preferably from 30 to 75 mass% per 100 mass% of the total amount of the polyols (A), (B) and (C). When the content of the polyol (C) is at least 20 mass%, the proportion of closed cells tends to be low, and a favorable flexible polyurethane foam will be obtained. When the content of the polyol (C) is at most 45 mass%, cells tend to be small, and favorable vibration characteristics and sound absorption characteristics will be achieved.

The polyol compound may contain, in addition to the polyols (A), (B) and (C), another polyol.

Another polyol may be a polyoxyalkylene polyol obtained by ring opening addition polymerization of an alkylene oxide to an initiator.

The initiator is preferably the same initiator as for the above polyol (A), i.e. a compound having from 2 to 6 active hydrogen atoms in its molecule.

The polymerization catalyst may, for example, be an alkali metal compound catalyst such as a potassium compound such as potassium hydroxide or potassium methoxide or a cesium compound such as cesium metal, cesium hydroxide, cesium carbonate or cesium methoxide; or a phosphazenium compound catalyst. Among them, preferred is an alkali metal compound catalyst, particularly preferred is potassium hydroxide or potassium methoxide in view of the economic superiority.

The hydroxyl value of another polyol is preferably from 15 to 120 mgKOH/g, more preferably from 20 to 90 mgKOH/g.

Another polyol may be used alone or in combination of two or more types thereof.

The content of another polyol is preferably from 0 to 50 mass%, more preferably from 10 to 50 mass% in the polyol compound (100 mass%).

### (Crosslinking agent)

In the present invention, a crosslinking agent may be used.

As the crosslinking agent, a compound having at least two active hydrogen atoms such as a hydroxyl group, a primary amino group or a secondary amino group is preferred.

The number average molecular weight of the crosslinking agent is preferably less than 2,000, more preferably at most 1,500, particularly preferably at most 1,000.

The amount of the crosslinking agent to be used is preferably from 0 to 10 parts by mass, more preferably from 1 to 8 parts by mass per 100 parts by mass of the polyol compound.

The crosslinking agent may, for example, be an aliphatic alcohol such as ethylene glycol, propylene glycol, 1,4-butanediol, neopentyl glycol, 1,6-hexanediol, diethylene glycol, triethylene glycol, dipropylene glycol, glycerol, trimethylolpropane, pentaerythritol, diglycerol, dextrose, sorbitol or sucrose; a compound such as monoethanolamine, diethanolamine, triethanolamine, bisphenol A, ethylenediamine, 3,5-diethyl-2,4 (or 2,6)-diaminotoluene (DETDA), 2-chloro-p-phenylenediamine (CPA), 3,5-bis(methylthio)-2,4 (or 2,6)-diaminotoluene, 1-trifluoromethyl-3,5-diaminobenzene, 1-trifluoromethyl-4-chloro-3,5-diaminobenzene, 2,4-toluenediamine, 2,6-toluenediamine, bis(3,5-dimethyl-4-aminophenyl)methane, 4,4'-diaminodiphenylmethane, ethylenediamine, m-xylylenediamine, 1,4-diaminohexane, 1,3-bis(aminomethyl)cyclohexane or isophoronediamine, or a compound obtained by ring opening addition polymerization of a relatively small amount of an alkylene oxide to the above compound. The crosslinking agents may be used alone or in combination of two or more of them.

### (Polyisocyanate compound)

The polyisocyanate compound may, for example, be tolylene diisocyanate (TDI), polymethylene polyphenyl polyisocyanate (crude MDI) or a mixture thereof. As the polyisocyanate compound, usually a mixture of tolylene diisocyanate and polymethylene polyphenyl polyisocyanate in a mass ratio of 80/20 is usually used.

The amount of the polyisocyanate compound to be used is preferably from 80 to 120, more preferably from 85 to 115 as represented by the isocyanate index. The isocyanate index is a value represented by 100 times the ratio of the number of isocyanate groups to the total number of active hydrogen atoms in e.g. the polyol, the crosslinking agent and water.

### (Blowing agent)

The blowing agent may, for example, be water or an inert gas. The blowing agents may be used alone or in combination of two or more of them.

The amount of the blowing agent to be used is, in a case where water alone is used, preferably at most 10 parts by mass, particularly preferably from 0.1 to 8 parts by mass per 100 parts by mass of the polyol compound. The amount of another blowing agent to be used may suitably be adjusted depending upon the requirement for e.g. the expansion ratio.

### (Foam stabilizer)

The foam stabilizer may, for example, be a silicone foam stabilizer or a fluorinated compound foam stabilizer. Among them, preferred is a silicone foam stabilizer having strong foam stabilizing power to form good foams.

The silicone foam stabilizer is preferably a silicon foam stabilizer for a flexible polyurethane foam, particularly preferably a silicone foam stabilizer for cold curing.

The silicone foam stabilizer may, for example, be SRX274C, SF2961, SF2962, SF2964, SF2965 or SF2969 manufactured by Toray Dow Corning Silicone; or L5305, L5307 or L5309 manufactured by GE Toshiba Silicone Co., Ltd. They may be used alone or in combination of two or more of them.

The amount of the foam stabilizer to be used is preferably at least 0.1 parts by mass and less than 2 parts by mass, more preferably from 0.2 to 1.5 parts by mass per 100 parts by mass of the polyol compound. When the amount of the foam stabilizer is at least 0.1 part by mass, the size of cells tends to be small, and coarsed cell is less likely to occur. When the amount of foam stabilizer to be used is less than 2 parts by mass, the ratio of closed cells in the flexible polyurethane foam to be obtained tends to decrease, and favorable air flowability will be achieved and as a result, the sound absorption characteristics in a high frequency region will improve.

### (Urethane-forming catalyst)

As the urethane-forming catalyst, a conventional catalyst may be used. It may, for example, be an aliphatic amine such as triethylene diamine, a dipropylene glycol solution of bis-((2-dimethylamino)ethyl)ether or morpholine; or an organotin compound such as tin octanoate or dibutyltin dilaurate. The urethane-forming catalysts may be used alone or in combination of two or more of them.

The amount of the urethane-forming catalyst to be used is preferably at most 1.0 part by mass, particularly preferably from 0.05 to 1.0 part by mass per 100 parts by mass of the polyol compound.

### (Others)

In the present invention, desired additives may be used in addition to the above-described urethane-forming catalyst, blowing agent, foam stabilizer and crosslinking agent. The additives may, for example, be a filler such as calcium carbonate or barium sulfate; an emulsifier; an aging preventing agent such as an antioxidant or an ultraviolet absorber; a flame retardant, a plasticizer, a colorant, an anti-fungus agent, a cell opener, a dispersant or a discoloration preventing agent.

### (Process for producing flexible polyurethane foam)

The flexible polyurethane foam of the present invention is produced by reacting the above-described polyol compound with the polyisocyanate compound in the presence of the blowing agent, the foam stabilizer and the urethane-forming catalyst.

As the process for molding the flexible polyurethane foam, preferred is a reactive injection molding method wherein a reactive mixture is directly injected into a mold by means of a low pressure foaming machine or a high pressure foaming machine. The flexible polyurethane foam of the present invention can be produced by either of a cold curing method and a hot curing method. Among them, a cold curing method is preferred.

The conditions for production of the flexible polyurethane foam of the present invention are not particularly limited so long as the flexible polyurethane foam can be produced. For example, a mixture (hereinafter referred to as a polyol system) of all starting materials except for the polyisocyanate compound and the polyisocyanate compound are respectively adjusted at from 15 to 40°C. Then, a predetermined amount of the polyisocyanate compound is added to the polyol system, followed by mixing for from 2 to 15 seconds by a high speed mixer, and the mixture is poured and immediately closed in a container heated at 30 to 80°C, followed by curing for from 4 to 20 minutes to obtain a flexible polyurethane foam.

### (Flexible polyurethane foam)

The thickness of the flexible polyurethane foam of the present invention is, in a case where the flexible polyurethane foam is to be used for a seat cushion, preferably at least 30 mm. When the thickness is at least 30 mm, the bottom-hitting feeling is less likely to result.

The core density of the flexible polyurethane foam of the present invention is preferably from 30 to 80 kg/m³, more preferably from 40 to 70 kg/m³. When the core density is at most 80 kg/m³, the mass of the flexible polyurethane foam will not be great, such being suitable for weight reduction of automobiles in recent years. When the core density is at least 30 kg/m³, the vibration characteristics and the soundproofing effect will improve. The core density is measured by the method in accordance with JIS K6400 (1997). For measurement of the core density, a sample obtained by removing the skin portion (edge portion) from the center portion of the flexible polyurethane foam and cutting the polyurethane foam into a size of 100 mm in lengthwise and transverse directions and a height of 50 mm is used.

The impact resilience of the flexible polyurethane foam of the present invention is preferably less than 70%, more preferably at most 65%, furthermore preferably at most 60%. When the impact resilience is less than 70%, the energy attenuation of the flexible polyurethane foam will improve, whereby favorable acoustic characteristics will be achieved. Measurement of the impact resilience is carried out by the method in accordance with JIS K6400 (1997). For measurement of the impact resilience, the same sample as for the measurement of the core density is used.

The transmissibility at resonance frequency of the flexible polyurethane foam of the present invention is preferably at most 3.5, more preferably at most 3.0. When the transmissibility at resonance frequency is at most 3.5, the flexible polyurethane foam of the present invention will have favorable vibration characteristics. The transmissibility at resonance frequency is measured by the method in accordance with JASO B408-89. As the conditions for measuring the vibration characteristics, a Tekken Plate (load: 50 kg) is used as a pressure plate, the vibration total amplitude is adjusted to be 5 mm, and the measurement frequency is from 1 to 13 Hz.

The sound absorption characteristic of the flexible polyurethane foam of the present invention is preferably at least 0.20 at 500 Hz, at least 0.50 at 1 kHz, at least 0.80 at 2 kHz and at least 0.60 at 4 kHz. The sound absorption characteristic is measured by the method in accordance with JIS A1405.

The flexible polyurethane foam of the present invention is useful for a cushion, a back (backrest), a seat, etc. It is particularly suitable for a seat cushion or a back (backrest) for seat for a vehicle such as an automobile or a railroad vehicle. It is very suitable for a seat cushion for an automobile.

### EXAMPLES

Now, the present invention will be explained in further detail with reference to Examples, but the present invention is by no means restricted thereto.

In the following description for starting materials used, the unsaturation value of the polyol, the hydroxyl value of the polyol and the viscosity of the polyol were measured in accordance with JIS K1557 (1970).

### STARTING MATERIALS USED

### (Polyol (A))

Polyol A1: Using as an initiator a polyol having a molecular weight of 1,000 obtained by ring opening addition polymerization of propylene oxide to glycerol, propylene oxide was subjected to ring opening addition polymerization to the initiator by using as a polymerization catalyst DMC (zinc hexacyanocobaltate-METB complex catalyst). Further, by using an aqueous solution of potassium hydroxide as a polymerization catalyst, dehydration alcoholating was carried out and ethylene oxide was subjected to ring opening addition polymerization to the terminal to obtain polyol A1 having an oxyethylene terminal structure. The amount of all oxyethylene groups was 16 mass% in polyol A1 (100 mass%). Further, the hydroxyl value was 24 mgKOH/g, the number of functional groups was 3, the viscosity was 1,600 mPa·s, and the unsaturation value was 0.020 meq/g.

Polyol A2: Using as an initiator a polyol having a molecular weight of 1,000 obtained by ring opening addition polymerization of propylene oxide to glycerol, propylene oxide was subjected to ring opening addition polymerization to the initiator up to 21 mass% of polyol A2 (100 mass%) by using as a polymerization catalyst DMC (zinc hexacyanocobaltate-METB complex catalyst). Then, propylene oxide and ethylene oxide in a mass ratio of 90/10 were randomly subjected to ring opening addition polymerization. Further, by using an aqueous solution of potassium hydroxide as a polymerization catalyst, dehydration alcoholating was carried out, and ethylene oxide was subjected to ring opening addition polymerization to the terminal to obtain polyol A2 having an oxyethylene terminal structure. The amount of all oxyethylene groups was 21 mass% in polyol A2 (100 mass%). The amount of oxyethylene groups at a random portion was 5 mass% in polyol A2 (100 mass%). The amount of oxyethylene groups in the terminal oxyethylene block chain was 15 mass% in polyol A2 (100 mass%). Further, the hydroxyl value was 24 mgKOH/g, the number of functional groups was 3, the viscosity was 1,650 mPa·s, and the unsaturation value was 0.016 meq/g.

### (Polyol (B))

Polyol B1: Using glycerol as an initiator, ethylene oxide and propylene oxide in a mass ratio of 80/20 were randomly subjected to ring opening addition polymerization to the initiator by using potassium hydroxide as a polymerization catalyst to obtain a polyol B1. The hydroxyl value was 48 mgKOH/g, the number of functional groups was 3, and the viscosity was 900 mPa·s.

Polyol B2: Using dipropylene glycol as an initiator, ethylene oxide and propylene oxide in a mass ratio of 80/20 were randomly subjected to ring opening addition polymerization to the initiator by using potassium hydroxide as a polymerization catalyst to obtain polyol B2. The hydroxyl value was 55 mgKOH/g, the number of functional groups was 2, and the viscosity was 450 mPa·s.

### (Polyol (C))

Polyol C1: Acrylonitrile was polymerized in polyol D3 as described hereinafter to obtain a polymer-dispersed polyol (polyol C1) having a solid content concentration of 20 mass%. The hydroxyl value was 19 mgKOH/g, the number of functional groups was 3, and the viscosity was 5,000 mPa·s.

Polyol C2: Using as an initiator a mixture of glycerol and pentaerythritol in a mass ratio of 50:50, propylene oxide was subjected to ring opening addition polymerization to the initiator by using potassium hydroxide as a polymerization catalyst to obtain a polyol having a hydroxyl value of 28 mgKOH/g. A mixture of acrylonitrile and styrene in a mass ratio of 45/55 was polymerized in the polyol to obtain a polymer-dispersed polyol (polyol C2) having a solid content concentration of 22 mass%. The hydroxyl value was 22 mgKOH/g, and the viscosity was 3,700 mPa·s.

Polyol C3: Using glycerol as an initiator, propylene oxide was subjected to ring opening addition polymerization to the initiator by using potassium hydroxide as a polymerization catalyst, and ethylene oxide was subjected to ring opening addition polymerization to the terminal to obtain a polyol having an oxyethylene terminal structure. The amount of all oxyethylene groups was 15 mass% in the polyol (100 mass%). Further, the number of functional groups was 3, and the hydroxyl value was 34 mgKOH/g. In the polyol, a mixture of acrylonitrile and styrene in the mass ratio of 77.5/22.5 was polymerized to obtain a polymer-dispersed polyol (polyol C3) having a solid content concentration of 35 mass%. The hydroxyl value was 24 mgKOH/g, and the viscosity was 5,000 mPa·s.

### (Other polyols)

Polyol D1: Using pentaerythritol as an initiator, propylene oxide was subjected to ring opening addition polymerization to the initiator by using potassium hydroxide as a polymerization catalyst, and ethylene oxide was subjected to ring opening addition polymerization to the terminal to obtain polyol D1 having an oxyethylene terminal structure. The amount of all oxyethylene groups was 13 mass% in polyol D1 (100 mass%). Further, the hydroxyl value was 28 mgKOH/g, the number of functional groups was 4, the viscosity was 1,200 mPa·s and the unsaturation value was 0.06 meq/g.

Polyol D2: Using glycerol as an initiator, propylene oxide was subjected to ring opening addition polymerization to the initiator by using potassium hydroxide as a polymerization catalyst, and ethylene oxide was subjected to ring opening addition polymerization to the terminal to obtain polyol D2 having an oxyethylene terminal structure. The amount of all oxyethylene groups was 15 mass% in polyol D2 (100 mass%), the hydroxyl value was 33 mgKOH/g, the number of functional groups was 3, the viscosity was 900 mPa·s, and the unsaturation value was 0.07 meq/g.

Polyol D3: Using glycerol as an initiator, propylene oxide was subjected to ring opening addition polymerization to the initiator using cesium hydroxide as a polymerization catalyst, and ethylene oxide was subjected to ring opening addition polymerization to the terminal to obtain polyol D3 having an oxyethylene terminal structure. The amount of all oxyethylene groups was 16 mass% in polyol D3 (100 mass%), the hydroxyl value was 24 mgKOH/g, the number of functional groups was 3, the viscosity was 1,300 mPa·s, and the unsaturation value was 0.04 meq/g.

### (Crosslinking agent)

Crosslinking agent E: diethanolamine
Crosslinking agent F: glycerol
Crosslinking agent G: A polyoxyethylene polyol which is a mixture of polyols obtained by using pentaerythritol and dipropylene glycol as initiators and by subjecting ethylene oxide to ring opening addition polymerization to the initiators by using potassium hydroxide as a polymerization catalyst, and having a hydroxyl value of 475 mgKOH/g and a viscosity of 1,200 mPa·s.
Crosslinking agent H: A polyoxyethylene polypropylene polyol obtained by using sorbitol as an initiator and by subjecting propylene oxide to ring opening addition polymerization to the initiator by using potassium hydroxide as a polymerization catalyst and further subjecting ethylene oxide to ring opening addition polymerization to the terminal, and having an amount of all oxyethylene groups of 28 mass% in the polyol (100 mass%), a hydroxyl value of 450 mgKOH/g and a viscosity of 7,900 mPa·s.

### (Polyisocyanate compound)

Coronate 1021 (TDI-80/crude MDI=80/20 (mass ratio), NCO content (%)=44.8, manufactured by Nippon Polyurethane Industry Co., Ltd.). "TDI-80" means a mixture of 2,4-TDI/2,6-TDI=80/20.

### (Urethane-forming catalyst)

Gelling catalyst: dipropylene glycol solution of triethylenediamine ("TEDA-L33", trade name, manufactured by TOSOH CORPORATION).

Blowing catalyst: dipropylene glycol solution of bis-((2-dimethylamino)ethyl)ether ("TOYOCAT ET", trade name, manufactured by TOSOH CORPORATION).

### (Foam stabilizer)

General use silicone foam stabilizer for cold curing: "SF2962", trade name, manufactured by Toray Dow Corning.

### (Blowing agent)

Water was used as a blowing agent.

### EXAMPLES 1 TO 5

### (Production of flexible polyurethane foam)

Blend ratios of raw materials are shown in Table 1. Values for the blend ratios of raw materials shown in Table 1 represent part(s) by mass. Example 1 corresponds to a Comparative Example, and Examples 2 to 5 correspond to Examples of the present invention.

Raw materials except for the polyisocyanate compound were mixed to prepare a polyol system. The polyol system was put in one tank of a two component type high pressure foaming machine (manufactured by Canon Inc., head: FLP18ϕ-L type), and the liquid temperature was adjusted at 25 ± 2°C. The polyisocyanate compound was put in the other tank, and the liquid temperature was adjusted at 25 ± 2°C. Then, the raw materials in both tanks were discharged and mixed under high pressure, and the mixture was injected into a mold, foamed and cured, and after a lapse of 6 minutes, the product was demolded to obtain a flexible polyurethane foam.

The raw material discharge conditions were such that the discharge pressure was 15 mPa and the discharge amount was 300 g/sec. As the mold, a mold having inside dimensions of 400 mm x 400 mm x 100 mm was used. As the mold temperature, the upper and lower mold temperatures were adjusted at 60°C ± 2°C.

### (Evaluation)

With respect to the obtained flexible polyurethane foam, the density, the foam physical properties (hardness (25% ILD (Indentation Load Deflection)), impact resilience), the air flowability, the vibration characteristics and the sound absorption characteristics were evaluated. The results are shown in Table 1.

Density, hardness (25% ILD), impact resilience, air flowability: measured in accordance with JIS K6400 (1997).

Vibration characteristics: The resonance frequency, the transmissibility at the resonance frequency and the transmissibility at 6 Hz were measured in accordance with JASO B408-89. As the conditions for measurement, a Tekken Plate (load: 50 kg) was used as a pressure plate, and the vibration total amplitude was adjusted to be 5 mm, and the measurement frequency was from 1 to 13 Hz.

Sound absorption characteristics: The normal incidence sound absorption characteristics were measured in accordance with JIS A1405. As a sound absorption measuring apparatus, a normal incidence sound absorption measuring tube (model 4206, manufactured by Bruel & Kjaer) was used, and as a sample for sound absorption measurement, a circular one of 100 mm and 25 mm in thickness was used in the case of 0.5 kHz and 1 kHz, and a circular one of 29 mm and 25 mm in thickness was used in the case of 2 kHz and 4 kHz.

**TABLE 1**

| | Ex. 1 | | Ex. 2 | | Ex. 3 | | Ex. 4 | | Ex. 5 | |
|---|---|---|---|---|---|---|---|---|---|---|
| Polyol | | | A1 | 10 | A1 | 10 | A1 | 40 | A2 | 15 |
| | | | B1 | 1 | B1 | 1 | B1 | 5 | B1 | 1 |
| | | | B2 | 6 | B2 | 6 | | | B2 | 2 |
| | C2 | 50 | C3 | 40 | C3 | 40 | C1 | 40 | C1 | 40 |
| | D1 | 25 | D2 | 43 | D2 | 43 | D3 | 15 | D3 | 32 |
| | D3 | 25 | | | | | | | | |
| Crosslinking agent | E | 1.5 | F | 1.5 | F | 1.5 | F | 0.8 | F | 0.8 |
| | G | 3.5 | | | | | H | 2 | H | 2 |
| Water | 3.3 | | 2.8 | | 2.8 | | 2 | | 2 | |
| Gelling catalyst Blowing catalyst Foam stabilizer | 0.5 | | 0.45 | | 0.45 | | 0.45 | | 0.45 | |
| | 0.07 | | 0.1 | | 0.1 | | 0.13 | | 0.13 | |
| | 1.2 | | 1.5 | | 1.5 | | 1 | | 1 | |
| Isocyanate index Core density (kg/m³) | 100 | | 95 | | 95 | | 110 | | 95 | |
| | 52.4 | | 52.5 | | 60.9 | | 65.1 | | 64.1 | |
| 25% ILD (N/314 cm²) | 245 | | 219 | | 249 | | 232 | | 210 | |
| Impact resilience (%) | 72 | | 63 | | 62 | | 55 | | 55 | |
| Air flowability (L/min) | 49.4 | | 23.1 | | 24.4 | | 12.9 | | 18.9 | |
| Vibration characteristics | | | | | | | | | | |
| Resonance frequency (Hz) | 3.36 | | 3.8 | | 3.55 | | 3.13 | | 3.40 | |
| Transmissibility at resonance frequency | 5.18 | | 2.09 | | 2.36 | | 2.64 | | 2.44 | |
| Transmissibility at 6 Hz | 0.43 | | 1.05 | | 0.81 | | 0.50 | | 0.61 | |
| Normal incidence sound absorption characteristics | | | | | | | | | | |
| 0.5 kHz | 0.178 | | 0.206 | | 0.252 | | 0.292 | | 0.266 | |
| 1 kHz | 0.465 | | 0.534 | | 0.639 | | 0.781 | | 0.733 | |
| 2 kHz | 0.935 | | 0.988 | | 0.966 | | 0.91 | | 0.904 | |
| 4 kHz | 0.716 | | 0.764 | | 0.768 | | 0.736 | | 0.755 | |

It is evident from the results in Table 1 that the sound absorption characteristics in a wide range as well as the vibration characteristics are improved in Examples 2 to 5.

The flexible polyurethane foam of the present invention has a low transmissibility at resonance frequency particularly among the vibration characteristics. Further, the sound absorption characteristics usually tend to depend on the mass in a low frequency region (at most 1 kHz), but the flexible polyurethane foam of the present invention has high sound absorption characteristics even with the same density (comparison between Examples 1 and 2). Further, a high air flowability is considered to be advantageous in a high frequency region (exceeding 1 kHz), but when the vibration characteristics are high, favorable sound absorption characteristics tend to be achieved even when the air flowability is low (comparison between Example I and Examples 2 to 5). Accordingly, the highly vibration-absorbing foam is found to have effects also for the attenuation of the sound energy.

### INDUSTRIAL APPLICABILITY

The flexible polyurethane foam of the present invention has favorable vibration absorption characteristics and favorable sound absorption characteristics in a wide range of from a low frequency region to a high frequency region, and it is thereby useful as a seat cushion or a seat back (backrest) for a seat for a vehicle such as an automobile.

The entire disclosure of Japanese Patent Application No. 2005-227632 filed on August 5, 2005 including specification, claims and summary is incorporated herein by reference in its entirety.

## Claims

1. A process for producing a flexible polyurethane foam, which comprises reacting a polyol compound with a polyisocyanate compound in the presence of a foam stabilizer, a blowing agent and a urethane-forming catalyst, wherein as the polyol compound, a polyol compound containing a polyoxyalkylene polyol (A) having an oxyalkylene group obtained by ring opening addition polymerization of an alkylene oxide to an initiator by using a composite metal cyanide complex catalyst, and having an unsaturation value less than 0.04 meq/g, a polyoxyalkylene polyol (B) obtained by random ring opening addition polymerization of ethylene oxide and an alkylene oxide having at least 3 carbon atoms to an initiator by using an alkali metal compound catalyst, and a polymer-dispersed polyol (C), is used.

2. The process for producing a flexible polyurethane foam according to Claim 1, wherein the polyol (A) is a polyol (A1) having an oxyethylene terminal structure obtained by ring opening addition polymerization of propylene oxide to an initiator by using a composite metal cyanide complex catalyst and then ring opening addition polymerization of ethylene oxide, having an amount of all oxyethylene groups of from 10 to 30 mass% in the polyol (A) (100 mass), having from 2 to 6 functional groups and having a hydroxyl value of from 15 to 56 mgKOH/g, or a polyol (A2) having an oxyethylene terminal structure obtained by ring opening addition polymerization of propylene oxide to an initiator by using a composite metal cyanide complex catalyst, then random ring opening addition polymerization of ethylene oxide and propylene oxide, and then ring opening addition polymerization of ethylene oxide, having an amount of all oxyethylene groups of from 10 to 30 mass% in the polyol (A) (100 mass), having an amount of oxyethylene groups at a random portion of at most 10 mass% in the polyol (A) (100 mass), having from 2 to 6 functional groups, and having a hydroxyl value of from 15 to 56 mgKOH/g.

3. The process for producing a flexible polyurethane foam according to Claim 1 or 2, wherein the polyol (B) is obtained by random ring opening addition polymerization of ethylene oxide and propylene oxide to an initiator by using an alkali metal compound catalyst, has a mass ratio of ethylene oxide to propylene oxide (ethylene oxide/propylene oxide) of from 50/50 to 95/5, has from 2 to 6 functional groups, and has a hydroxyl value of from 22 to 120 mgKOH/g.

4. The process for producing a flexible polyurethane foam according to Claim 1, 2 or 3, wherein the polymer-dispersed polyol (C) is a dispersion having fine polymer particles (C') dispersed in a polyoxyalkylene polyol matrix.

5. The process for producing a flexible polyurethane foam according to any one of Claims 1 to 4, wherein the content of the polyol (A) is from 5 to 80 mass% per 100 mass% of the total amount of the polyols (A), (B) and (C), the content of the polyol (B) is from 0.5 to 15 mass% per 100 mass% of the total amount of the polyols (A), (B) and (C), and the content of the polymer-dispersed polyol (C) is from 20 to 80 mass% per 100 mass% of the total amount of the polyols (A), (B) and (C).

6. A flexible polyurethane foam obtained by the process for producing a flexible polyurethane foam as defined in any one of Claims 1 to 5.

7. A seat for an automobile provided with a seat cushion made of the flexible polyurethane foam as defined in Claim 6.
